# EUROPÄISCHE PATENTSCHRIFT

(11) **EP 1 632 372 B1**
(45) Veröffentlichungstag und Bekanntmachung des Hinweises auf die Patenterteilung: **11.03.2009**
(21) Anmeldenummer: 05016539.8
(22) Anmeldetag: 29.07.2005
(51) Int. Cl.: B60H 1/32

(54) **Kraftfahrzeug-Standklimaanlage**
Air conditioning system for a vehicle with engine-independent cooling
Système de climatisation pour véhicule avec mode autonome

(30) Priorität: 01.09.2004 DE 102004042691; 15.04.2005 US 107601
(43) Veröffentlichungstag der Anmeldung: 08.03.2006
(73) Patentinhaber: Behr GmbH & Co. KG, 70469 Stuttgart (DE)
(72) Erfinder: Heberle, Arthur, Dr.-Ing., 68163 Mannheim (DE); Weinbrenner, Marcus, 70499 Stuttgart (DE)
(74) Vertreter: Mantel, Berthold Friedrich

(56) Entgegenhaltungen:
- DE-A1- 4 414 547
- DE-A1- 10 242 369
- DE-A1- 19 917 811
- US-A- 4 762 170

## Beschreibung

Die Erfindung betrifft eine Kraftfahrzeug-Standklimaanlage gemäß dem Oberbegriff des Anspruches 1.

Aus der DE 44 14 547 A1 ist eine Kraftfahrzeug-Standklimaanlage mit einem ersten, fahrzeugmotorisch angetriebenen Kompressor und einem zweiten, parallel hierzu geschalteten, elektrisch mit Hilfe von Kraftfahrzeug-Zusatzbatterien gespeisten Gleichstrom-Elektromotors antreibbaren Kompressor bekannt. Im Normalbetrieb, das heißt bei laufendem Motor, wird das Kältemittel im Kältemittel-Kreislauf ausschließlich mit Hilfe des ersten Kompressors, im Standbetrieb, das heißt bei stehendem Motor, ausschließlich mit Hilfe des zweiten Kompressors umgewälzt. Hierbei erfolgt jeweils die Kühlung des Kältemittels in einem Kondensator, welcher nach der Zusammenführung der beiden Zweige angeordnet ist.

Ferner sind eine Vielzahl von Standklimaanlagen mit einem Kältespeicher bekannt, jedoch benötigen diese eine gewisse Aufladezeit.

So ist beispielsweise in der DE 102 42 369 A1 ein Klimatisierungssystem für ein Kraftfahrzeug, insbesondere ein Hybridfahrzeug beschrieben, welches einen Kältespeicher aufweist, der insbesondere dazu vorgesehen ist, im Standbetrieb des Klimatisierungssystems entladen und dabei als ein zweiter Kondensator betrieben zu werden.

Weiter ist aus der US 4,762,170 ein Hilfsenergiesystem für einen Truck bekannt, welches eine zweite Antriebsvorrichtung aufweist, die ein Zusatzklimatisierungssystem im Fahrzeugstillstand betreiben kann. Hierbei ist jeweils ein Kondensator im Hilfsklimatisierungssystem und ein weiterer Kondensator im Hauptklimatisierungssystem vorgesehen.

Derartige Kraftfahrzeug-Standklimaanlagen lassen somit noch Wünsche offen.

Es ist Aufgabe der Erfindung, eine Kraftfahrzeug-Standklimaanlage der eingangs genannten Art zu verbessern.

Diese Aufgabe wird gelöst durch eine Kraftfahrzeug-Standklimaanlage mit den Merkmalen des Anspruchs 1. Vorteilhafte Ausgestaltungen sind Gegenstand der Unteransprüche.

Erfindungsgemäß ist ein Kraftfahrzeug-Standklimaanlage mit einem Kältemittel-Kreislauf vorgesehen, in welchem mindestens ein Kompressor angeordnet ist, wobei es sich um einen mechanischen und/oder einen elektrischen Kompressor handeln kann, welcher das Kältemittel im Kältemittel-Kreislauf umwälzt. Im Kältemittel-Kreislauf ist ein von einem mechanisch mit Hilfe des Kraftfahrzeug-Motors angetriebenen Lüfter luftgekühlter Kondensator zur Kühlung des vom Kompressor kommenden Kältemittels angeordnet, wobei neben dem ersten Kondensator ein zweiter Kondensator vorgesehen ist. An diesem zweiten Kondensator ist ein zweiter Lüfter angeordnet, der elektrisch und dadurch unabhängig vom Betrieb des Kraftfahrzeug-Motors, antreibbar ist.

Das Vorsehen eines zweiten, Kondensators ermöglicht eine optimierte Auslegung der beiden Kondensatoren auf den jeweiligen Betrieb, das heißt der erste Kondensator mit zugehörigem Lüfter ist beispielsweise auf den Normalbetrieb mit laufendem Motor und der zweite Kondensator mit zugehörigem Lüfter ist beispielsweise auf den Standbetrieb mit stehendem Motor ausgelegt, wodurch sich eine Leistungsoptimierung ergibt.

Der zweite Kondensator wird von einem Luftstrom durchströmt, der durch einen elektrisch antreibbaren Lüfter gefördert wird. Dabei steht der Lüfter bevorzugt im Normalbetrieb, so dass die Kühlung des Kältemittels im Wesentlichen ausschließlich durch den ersten Kondensator erfolgt.

Vorzugsweise ist ein Bypass um den zweiten Kondensator vorgesehen, so dass im Normalbetrieb der zweite Kondensator nicht von Kältemittel durchströmt wird, wodurch sich die erforderliche Leistung für den Kompressor (und somit in der Regel für den Motor) etwas verringern lässt und/oder der zweite Kondensator nicht als Kältemittelspeicher wirkt.

Ein Bypass kann auch um den ersten Kondensator vorgesehen sein, so dass im Standbetrieb der erste Kondensator umströmt, insbesondere nicht durchströmt werden kann, wodurch die erforderliche Antriebsleistung des elektrischen Kompressors gesenkt werden kann und/oder der erste Kondensator nicht als Kältemittelspeicher wirkt.

Für die Kondensatoren ist eine Parallelschaltung vorgesehen. Abhängig von der Betriebsart (Normal- oder Standbetrieb) wird bevorzugt je einer der Kondensatoren von Kältemittel durchströmt und der an demselben angeordnete Lüfter mechanisch bzw. elektrisch angetrieben.

Bevorzugt ist jedem der Kondensatoren nachfolgend angeordnet ein Sammler vorgesehen. In diesen Sammlern kann überschüssiges, flüssiges Kältemittel gesammelt werden und ist bei Bedarf schnell verfügbar.

An dem ersten Kondensator kann an Stelle eines mechanisch angetriebenen Lüfters ein elektrisch antreibbarer Lüfter vorgesehen sein, so dass eine vom Motor unabhängige Steuerung der Lüfterleistung möglich ist, wodurch die Kühlleistung optimiert werden kann. Alternativ kann ein elektrisch antreibbarer Lüfter auch zusätzlich zum mechanischen Lüfter vorgesehen sein.

Im Standbetrieb erfolgt die elektrische Energieversorgung des Kompressors und des oder der Lüfter vorzugsweise über Batterien, über eine externe Stromversorgung, beispielsweise über einen Netzspannungsanschluss und/oder über eine APU.

Vorzugsweise können im Standbetrieb auch beide Kondensatoren von Kältemittel zumindest teilweise durchströmt werden, wobei nur einer der Kondensatoren von einem Luftstrom gekühlt wird. Der andere Kondensator wird hierbei nur im Normalbetrieb von einem mechanisch angetriebenen Lüfter gekühlt. Dies ermöglicht eine einfachere Ausgestaltung des Kältemittel-Kreislaufs und eine einfachere Regelung desselben. Zudem ist, auch wenn der erste Kondensator nicht von Luft durchströmt wird, eine gewisse Kühlleistung gegeben.

Der im Standbetrieb nur teilweise durchströmte Kondensator dient, vorzugsweise als zusätzlicher Sammler für Kältemittel, welches bei der geringeren erforderlichen Kühlleistung im Standbetrieb nicht benötigt wird. Hierfür ist der Kondensator entsprechend ausgebildet.

Im Folgenden wird die Erfindung anhand mehrerer Ausführungsbeispiele, teilweise mit Varianten, unter Bezugnahme auf die Zeichnung im Detail erläutert. In der Zeichnung zeigen:

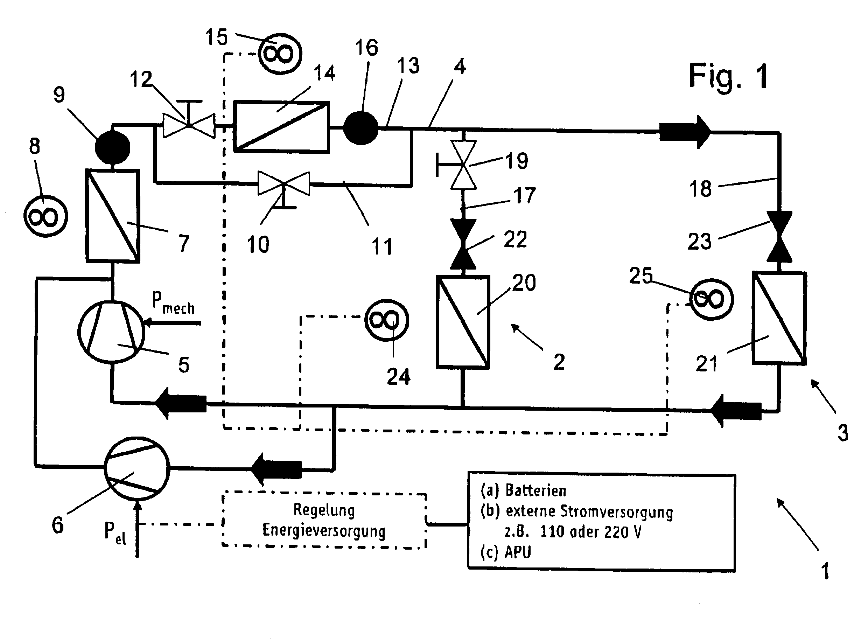

- Fig. 1: eine vereinfachte Darstellung eines Kühlkreislaufs gemäß einem ersten Beispiel, mit zwei Kondensatoren in Reihenschaltung,
- Fig. 2: eine vereinfachte Darstellung eines Kühlkreislaufs gemäß einem zweiten Beispiel, mit zwei Kondensatoren in Reihenschaltung, und
- Fig. 3: eine vereinfachte Darstellung eines Kühlkreislaufs gemäß einem dritten Beispiel, mit zwei Kondensatoren in Reihenschaltung, und
- Fig. 4: eine vereinfachte Darstellung eines Kühlkreislaufs gemäß einem vierten Beispiel, mit zwei Kondensatoren in Reihenschaltung, und
- Fig. 5: eine vereinfachte Darstellung eines Kühlkreislaufs gemäß einem fünften Beispiel, mit zwei Kondensatoren in Reihenschaltung, und
- Fig. 6: eine vereinfachte Darstellung eines Kühlkreislaufs gemäß einem sechsten Beispiel, mit zwei Kondensatoren in Reihenschaltung, und
- Fig. 7: eine vereinfachte Darstellung eines Kühlkreislaufs gemäß einem Ausführungsbeispiel, der Erfindung,
- Fig. 8: eine vereinfachte Darstellung eines Kühlkreislaufs gemäß einem weiteren achten Ausführungsbeispiel, der Erfindung, und
- Fig. 9: eine vereinfachte Darstellung eines Kühlkreislaufs gemäß einem weiteren Ausführungsbeispiel der Erfindung.

Eine Kraftfahrzeug-Klimaanlage 1 mit einem Front-Klimagerät 2 und einem Heck- oder Fond-Klimagerät 3 weist einen Kältemittel-Kreislauf 4, welcher im Normalbetrieb von einem mit Hilfe des Kraftfahrzeug-Motors angetriebenen riemengetriebenen ersten Kompressor 5 und im Standbetrieb, das heißt bei stehendem Motor und somit stehendem ersten Kompressor 5, von einem elektrisch über Batterien oder eine externe (Wechsel-)Stromversorgung oder eine Hilfsenergieversorgung (APU = Auxiliary Power Unit) angetriebenen zweiten Kompressor 6 umgewälzt wird. In der Zeichnung ist die elektrische Stromversorgung durch Strich-Punkt-Linien angedeutet.

Gemäß dem vorliegenden ersten Beispiel sind die beiden Kompressoren 5 und 6 in parallelen Zweigen des Kältemittel-Kreislaufs 4 angeordnet. Um ein Rückströmen bei stehendem zweiten Kompressor 6 zu verhindern, ist im entsprechenden Zweig des Kältemittel-Kreislaufs 4 nach dem zweiten Kompressor 6 ein Rückschlagventil (nicht dargestellt) angeordnet. Ein entsprechendes Rückschlagventil kann auch im anderen Zweig nach dem ersten Kompressor 5 vorgesehen sein.

Im Folgenden wird der normale Betrieb, das heißt der Betrieb bei laufendem Motor, beschrieben. Das von dem ersten Kompressor 5 kommende, in Folge der Kompression heiße Kältemittel durchströmt zum Abkühlen einen ersten Kondensator 7, welcher von Luft gekühlt wird. Dabei wird die Luft von einem ersten, mit Hilfe des Kraftfahrzeug-Motors angetriebenen Lüfter 8 durch den Kondensator 7 gefördert. Zusätzlich erfolgt die Kühlung auch durch den Fahrtwind. Nach dem Kondensator 7 ist ein erster Sammler 9 zum Sammeln und Zwischenspeichern von überschüssigem flüssigem Kältemittel angeordnet. Nach dem ersten Sammler 9 ist eine Verzweigung vorgesehen, wobei ein erster, von einem ersten Ventil 10 absperrbarer Zweig 11 einen Bypass bildet zum zweiten, von einem zweiten Ventil 12 absperrbarer Zweig 13, in welchem ein zweiter Kondensator 14, durch welchen Luft mit Hilfe eines zweiten elektrisch angetriebenen Lüfters 15 gefördert werden kann, und ein zweiter Sammler 16 angeordnet ist. Im Normalbetrieb ist das erste Ventil 10 offen und das zweite Ventil 12 geschlossen, so dass das Kältemittel durch den ersten Zweig 11 strömt. Der zweite Lüfter 15 steht im Normalbetrieb. Im Kältemittel-Kreislauf 4 anschließend erfolgt eine Verteilung des Kältemittels auf zwei dem jeweiligen Klimagerät 2 bzw. 3 zugeordneten Zweigen 17 und 18, wobei im, dem Front-Klimagerät 2 zugeordneten Zweig 17 ein Ventil 19 den Kältemitteldurchfluss absperren kann. Das Kältemittel strömt, bevor es zum jeweiligen Verdampfer 20 bzw. 21 gelangt, durch ein Expansionsorgan 22 bzw. 23, im dem es expandiert und dadurch abgekühlt wird. Jedem der Verdampfer 20 und 21 ist ein elektrisch angetriebenes Gebläse 24 bzw. 25 zugeordnet, das die Luft durch den Verdampfer 20 bzw. 21 und zum Kraftfahrzeug-Innenraum in der jeweiligen Klimazone fördert. Nach dem Durchströmen der Verdampfer 20 und 21 werden die Kältemittelströme wieder vereinigt und gelangen im normalen Betrieb wieder zum ersten Kompressor 5.

Im Standbetrieb, das heißt bei stehendem Kraftfahrzeug-Motor, erfolgt die Umwälzung des Kältemittels ausschließlich durch den zweiten, elektrisch angetriebenen Kompressor 6. Das heiße Kältemittel strömt durch den ersten Kondensator 7, wobei in Folge des stehenden Motors und des somit stehenden ersten Lüfters 8 keine Luft durch denselben gefördert wird, wodurch die Kühlleistung gering ist, und den ersten Sammler 9. Auf Grund des im Standbetrieb geschlossenen ersten Ventils 10 strömt das noch heiße Kältemittel durch das nunmehr offene zweite Ventil 12 und den zweiten Kondensator 14, in welchem, da nunmehr der zweite Lüfter 15 mit Hilfe der elektrischen Energieversorgung angetrieben wird, das Kältemittel abgekühlt wird. Flüssiges, überschüssiges Kältemittel kann sich im folgenden zweiten Sammler 16 sammeln. Entsprechend dem Normalbetrieb erfolgt anschließend eine Verteilung auf die beiden Zweige 17 und 18 und der weitere Verlauf entspricht dem zuvor beschriebenen, wobei das Kältemittel auf Grund des stehenden ersten Kompressors 5 wieder zum zweiten Kompressor 6 gelangt.

Da bei parallel geschalteten Verdampfern und unterschiedlichen Kompressoren sich das Kältemittel im Standbetrieb bevorzugt in bestimmten Bauteilen, insbesondere in einem parallel geschalteten und sich nicht in Betrieb befindlichen Kompressor, im Überschuss ansammelt, was zu einem Abfall der Kälteleistung und unter Umständen auch zu einem Ausfall der Kompressoren führen kann, da im Standbetrieb genau so viel Kältemittel vorhanden ist wie im Normalbetrieb, jedoch auf Grund der geringeren erforderlichen Kälteleistung eigentlich viel weniger Kältemittel benötigt wird, sind sinnvollerweise entsprechende Maßnahmen zur Verringerung der Kältemittelmenge im Standbetrieb zu treffen. Dies erfolgt gemäß dem vorliegenden Beispiel dadurch, dass im Standbetrieb eine definierte Menge an Kältemittel aus dem Kreislauf über einen Bypass (nicht dargestellt) abgesaugt und zwischengelagert wird. Sobald in den Normalbetrieb umgeschaltet wird, wird das Kältemittel wieder in den Kältemittel-Kreislauf 4 gepumpt.

Gemäß einer alternativen Variante wird der elektrische Kompressor nicht kontinuierlich sondern nur intervallweise betrieben. Entsprechend einer weiteren Variante ist im Kältemittel-Kreislauf ein Kältemittel-Sammler mit variabler Füllmenge vorgesehen. Dabei ist auch eine Integration von Expansionsorgan in einem Sammler und Trocknereinheit möglich, so dass anstelle der beiden Expansionsorgane des ersten Ausführungsbeispiels entsprechende Kombinationen vorgesehen werden.

Weiter alternativ ist im Kältemittel-Kreislauf ein Bypass mit einem Eisspeicher vorgesehen, in den das überschüssige (kalte) Kältemittel eingeleitet wird, die Sole abkühlt, und während des Standbetrieb in diesem Bypass verweilt.

Als weitere Variante kann zumindest ein Teil des Kondensators, der im Standbetrieb nicht von kühlender Luft durchströmt wird, als Zwischenlager für das überschüssige Kältemittel dienen.

Gemäß einer nicht in der Zeichnung dargestellten Variante zum ersten Beispiel kann für den Standbetrieb ein Bypass, entsprechend zum Bypass um den zweiten Kondensator 14, zum ersten Kondensator 7 vorgesehen sein. Die Regelung erfolgt entsprechend mit Hilfe von zwei in den beiden Zweigen angeordneten Ventilen.

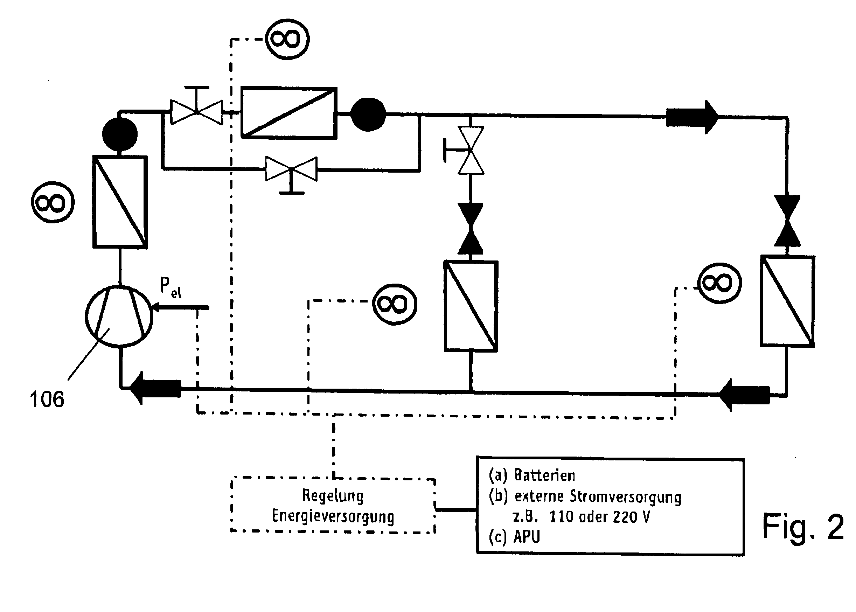

Gemäß dem in Fig. 2 dargestellten zweiten Beispiel ist an Stelle der parallelen Zweige mit mechanisch angetriebenem Kompressor 5 und elektrisch angetriebenem Kompressor 6 lediglich ein elektrisch angetriebener Kompressor 106 vorgesehen, welcher sowohl im Normalbetrieb als auch im Standbetrieb das Kältemittel bei Bedarf umwälzt. In Hinblick auf den Normal- und Standbetrieb wird auf die Beschreibung des ersten Beispiels verwiesen.

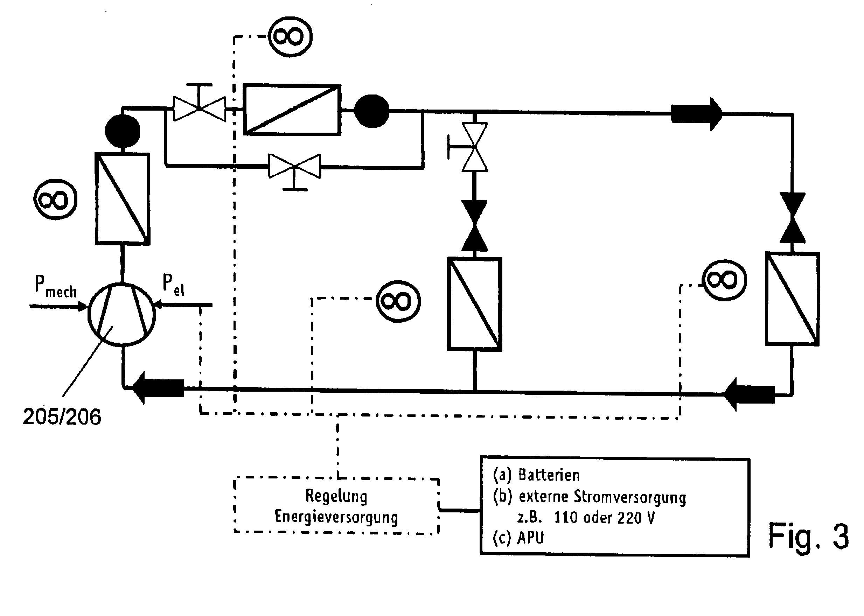

Bei dem in Fig. 3 dargestellten dritten Beispiel ist an Stelle des elektrisch angetriebenen Kompressors 106 gemäß dem zweiten Ausführungsbeispiel ein sowohl mechanisch vom Motor entsprechend dem Kompressor 5 antreibbarer als auch elektrisch, entsprechend dem Kompressor 6 antreibbarer Hybrid-Kompressor 205/206 vorgesehen, welcher im Normalbetrieb vom laufenden Kraftfahrzeug-Motor und im Standbetrieb mit Hilfe der Batterien, einer externen Stromversorgung oder einer APU angetrieben wird. In Hinblick auf den sonstigen Normal- und Standbetrieb wird auf die Beschreibung des ersten Beispiels verwiesen.

Bevorzugt ist eine erfindungsgemäße Kraftfahrzeug-Klimaanlage 1 in einem Lastkraftwagen oder Truck mit einem von der Fahrerkabine bzw. dem Führerhaus abgetrennten Bereich, wie zum Beispiel einer Schlafkabine einsetzbar, wobei sich das Front-Klimagerät 2 in der Fahrerkabine befindet und ein Heck- oder Fond-Klimagerät 3 im abgetrennten Bereich des Fahrzeugs.

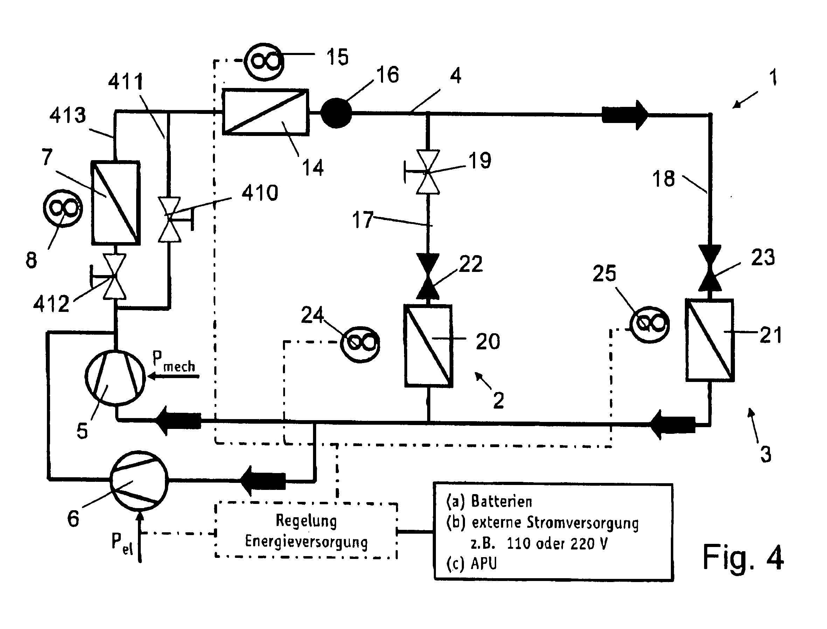

Gemäß dem vierten, in Fig. 4 dargestellten Beispiel, das, soweit im Folgenden nicht explizit beschrieben, dem ersten Beispiel entspricht, ist nach der Zusammenführung der beiden parallelen Zweige mit den Kompressoren 5 und 6 eine Verzweigung vorgesehen, wobei ein erster, von einem ersten Ventil 410 absperrbarer Zweig 411 einen Bypass bildet zum zweiten, von einem zweiten Ventil 412 absperrbaren Zweig 413, in welchem der erste Kondensator 7, durch welchen Luft mit Hilfe des mechanisch angetriebenen Lüfters 8 gefördert werden kann, angeordnet ist. Im Normalbetrieb ist das erste Ventil 410 geschlossen und das zweite Ventil 412 offen, so dass das Kältemittel durch den zweiten Zweig 413 und somit durch den Kondensator 7 strömt.

Um den zweiten Kondensator 14 ist im Gegensatz zum ersten Beispiel kein Bypass vorgesehen. Ferner ist nur nach dem zweiten Kondensator 14, durch welchen Luft mit Hilfe des elektrisch angetriebenen Lüfters 15 gefördert werden kann, der Sammler 16 angeordnet, d.h. der erste Sammler 9 entfällt gemäß dem vorliegenden vierten Beispiel.

Im Folgenden wird der normale Betrieb, das heißt der Betrieb bei laufendem Motor, beschrieben. Das von dem ersten Kompressor 5 kommende, in Folge der Kompression heiße Kältemittel durchströmt zum Abkühlen einen ersten Kondensator 7, welcher von Luft gekühlt wird. Dabei wird die Luft von einem ersten, mit Hilfe des Kraftfahrzeug-Motors angetriebenen Lüfter 8 bei offenem zweiten Ventil 412 und geschlossenem ersten Ventil 410 durch den Kondensator 7 gefördert. Zusätzlich erfolgt die Kühlung auch durch den Fahrtwind. Anschließend strömt das gekühlte Kältemittel durch den zweiten Kondensator 14, wobei der elektrisch angetriebene zweite Lüfter 15 steht, und den Sammler 16.

Im Kältemittel-Kreislauf 4 anschließend erfolgt eine Verteilung des Kältemittels auf zwei dem jeweiligen Klimagerät 2 bzw. 3 zugeordnete Zweige 17 und 18, wobei im, dem Front-Klimagerät 2 zugeordneten Zweig 17 ein Ventil 19 den Kältemitteldurchfluss absperren kann. Das Kältemittel strömt, bevor es zum jeweiligen Verdampfer 20 bzw. 21 gelangt, durch ein Expansionsorgan 22 bzw. 23, im dem es expandiert und dadurch abgekühlt wird. Jedem der Verdampfer 20 und 21 ist ein elektrisch angetriebenes Gebläse 24 bzw. 25 zugeordnet, das die Luft durch den Verdampfer 20 bzw. 21 und zum Kraftfahrzeug-Innenraum in der jeweiligen Klimazone fördert. Nach dem Durchströmen der Verdampfer 20 und 21 werden die Kältemittelströme wieder vereinigt und gelangen im normalen Betrieb wieder zum ersten Kompressor 5. Durch teilweises oder vollständiges Absperren des Ventils 19, kann beispielsweise das Kältemittel nur im Zweig 18 oder zumindest überwiegend in diesem geführt werden.

Im Standbetrieb, das heißt bei stehendem Kraftfahrzeug-Motor, erfolgt die Umwälzung des Kältemittels ausschließlich durch den zweiten, elektrisch angetriebenen Kompressor 6. Das heiße Kältemittel strömt durch den Bypass zum ersten Kondensator 7, d.h. durch den Zweig 411 bei geöffnetem ersten Ventil 410 und geschlossenem zweiten Ventil 412. Der erste Lüfter 8 steht in Folge des stehenden Motors. Anschließend strömt das noch heiße Kältemittel den zweiten Kondensator 14, in welchem, da nunmehr der zweite Lüfter 15 mit Hilfe der elektrischen Energieversorgung angetrieben wird, das Kältemittel abgekühlt wird. Flüssiges, überschüssiges Kältemittel kann sich im nachfolgenden Sammler 16 sammeln. Entsprechend dem Normalbetrieb erfolgt anschließend eine Verteilung auf die beiden Zweige 17 und 18 und der weitere Verlauf entspricht dem zuvor beschriebenen, wobei das Kältemittel auf Grund des stehenden ersten Kompressors 5 wieder zum zweiten Kompressor 6 gelangt.

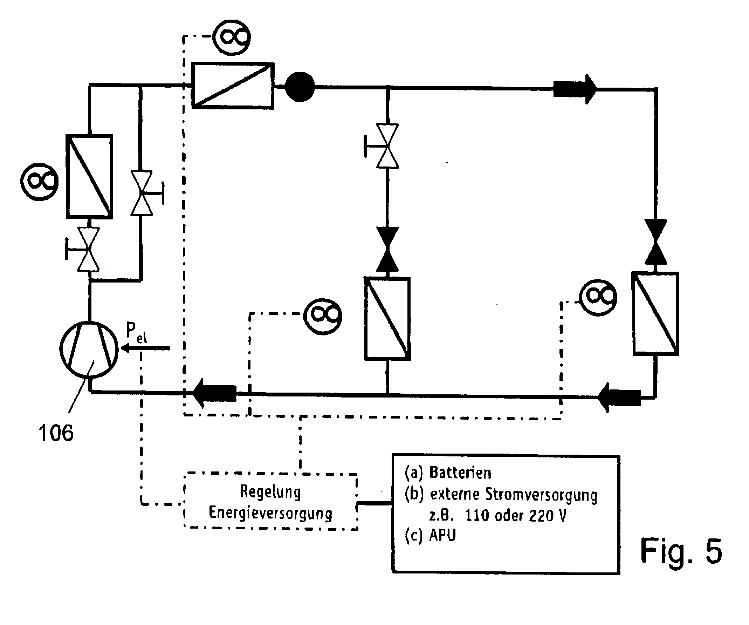

Gemäß dem in Fig. 5 dargestellten fünften Beispiel ist an Stelle der parallelen Zweige mit mechanisch angetriebenem Kompressor 5 und elektrisch angetriebenem Kompressor 6 lediglich ein elektrisch angetriebener Kompressor 106 vorgesehen, welcher sowohl im Normalbetrieb als auch im Standbetrieb das Kältemittel bei Bedarf umwälzt. In Hinblick auf den Normal- und Standbetrieb wird auf die Beschreibung des vierten Beispiels verwiesen.

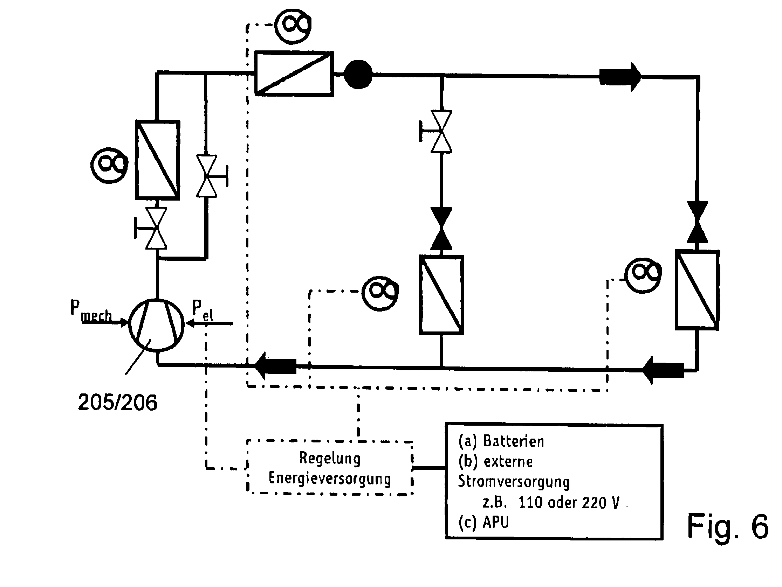

Bei dem in Fig. 6 dargestellten sechsten Beispiel ist an Stelle des elektrisch angetriebenen Kompressors 106 gemäß dem fünften Beispiel ein sowohl mechanisch vom Motor entsprechend dem Kompressor 5 antreibbarer als auch elektrisch, entsprechend dem Kompressor 6 antreibbarer Hybrid-Kompressor 205/206 vorgesehen, welcher im Normalbetrieb vom laufenden Kraftfahrzeug-Motor und im Standbetrieb mit Hilfe der Batterien, einer externen Stromversorgung oder einer APU angetrieben wird. In Hinblick auf den sonstigen Normal- und Standbetrieb wird wiederum auf die Beschreibung des vierten Beispiels verwiesen.

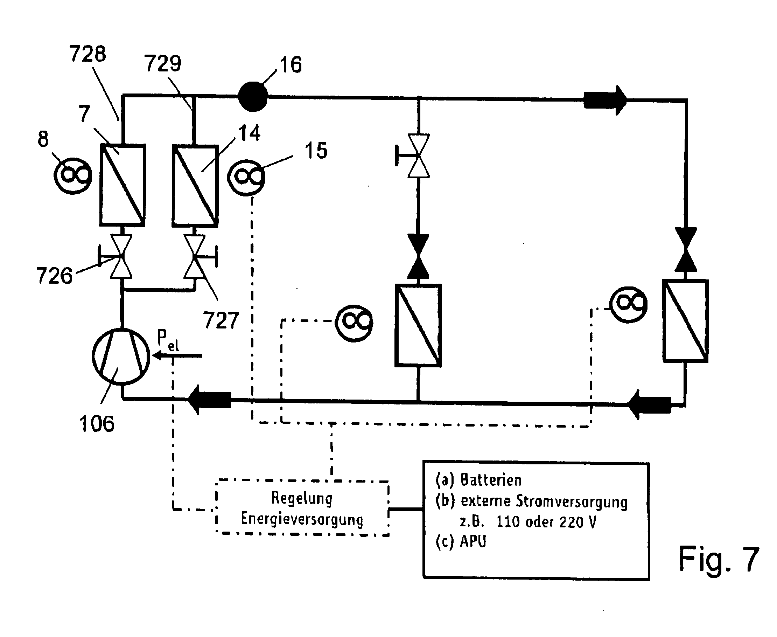

Gemäß dem in Fig. 7 dargestellten siebten Beispiel ist ein elektrischer Kompressor 106 zur Umwälzung des Kältemittels vorgesehen, der sowohl im Normalbetrieb als auch im Standbetrieb angetrieben wird. Im Kältemittel-Kreislauf 4 sind dem elektrischen Kompressor 106 nachgeordnet die beiden Kondensatoren 7 und 14 mit ihren Lüftern, d.h. dem mechanisch antreibbaren Lüfter 8 und dem elektrisch antreibbaren Lüfter 14, parallel zueinander geschaltet, wobei vor jedem ersten Kondensator 7 ein erstes Ventil 726 und vor dem zweiten Kondensator ein zweites Ventil 727 angeordnet ist. Nach der Zusammenführung der parallelen Zweige 728 und 729 ist ein Sammler 16 angeordnet. Die weitere Ausgestaltung des Kältemittel-Kreislaufs 4 entspricht derjenigen der zuvor beschriebenen Beispiele, so dass hierauf nicht näher eingegangen wird.

Im Normalbetrieb wird das Kältemittel vom elektrischen Kompressor 106 umgewälzt und strömt auf Grund des offenen ersten Ventils 726 und des geschlossenen zweiten Ventils 727 durch den ersten Zweig 728, in welchem der erste Kondensator 7 angeordnet ist. Dieser wird von Luft durchströmt, welche durch den mechanisch vom laufenden Motor angetriebenen Lüfter 8 gefördert wird. Der elektrisch antreibbare Lüfter 15 am zweiten Kondensator 14 steht. Anschließend strömt das Kältemittel durch den Sammler 16. In Hinblick auf den weiteren Strömungsverlauf wird auf die Beschreibung des ersten Ausführungsbeispiels verwiesen.

Im Standbetrieb, d.h. bei stehendem Motor, ist das erste Ventil 726 geschlossen und das zweite Ventil 727 offen, so dass das heiße Kältemittel nur durch den zweiten Kondensator 14 strömt. In diesem Fall wird derselbe von Luft durchströmt, die durch den elektrisch angetriebenen zweiten Lüfter 15 gefördert wird, wohingegen der mechanisch antreibbare erste Lüfter 8 steht. Anschließend strömt das Kältemittel durch den Sammler 16. In Hinblick auf den weiteren Strömungsverlauf wird wiederum auf die Beschreibung des ersten Ausführungsbeispiels verwiesen.

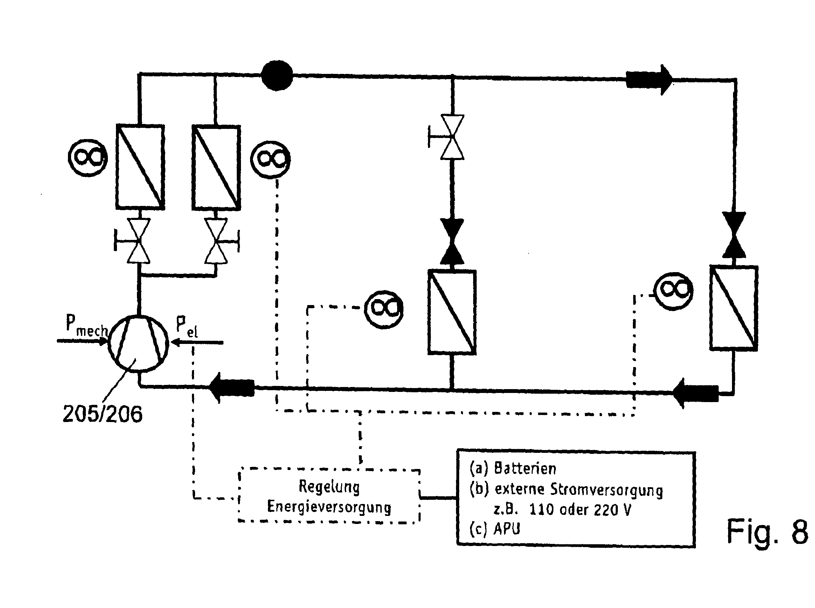

Gemäß dem weiteren, in Fig. 8 dargestellten Ausführungsbeispiel der Erfindung ist an Stelle des elektrischen Kompressors 106 des vorigen Ausführungsbeispiels ein Hybridkompressor 205/206 vorgesehen, der im Normalbetrieb vom laufenden Motor und im Standbetrieb elektrisch angetrieben wird. Ansonsten stimmt dieses Ausführungsbeispiel mit dem zuvor beschriebenen Ausführungsbeispiel überein.

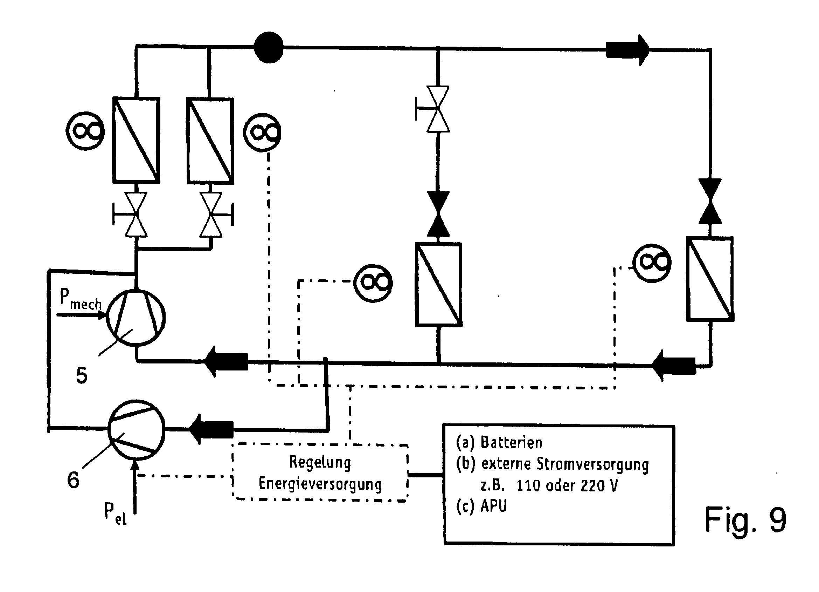

Gemäß dem weiteren, in Fig. 9 dargestellten Ausführungsbeispiel der Erfindung ist, wie beim ersten Beispiel, an Stelle des elektrischen Kompressors 106 des Ausführungsbeispiels von Figur 7 eine Parallelschaltung eines mechanischen Kompressors 5 und eines elektrischen Kompressors 6 vorgesehen. Ansonsten stimmt dieses Ausführungsbeispiel mit dem Ausführungsbeispiel nach Figur 7 überein.

### Bezugszeichenliste

1 Kraftfahrzeug-Klimaanlage
2 Front-Klimagerät
3 Heck- oder Fond-Klimagerät
4 Kältemittel-Kreislauf
5 erster Kompressor
6, 106 zweiter Kompressor
7 erster Kondensator
8 Lüfter
9 erster Sammler
10 erstes Ventil
11 erster Zweig
12 zweites Ventil
13 zweiter Zweig
14 zweiter Kondensator
15 zweiter Lüfter
16 zweiter Sammler
17 Zweig
18 Zweig
19 Ventil
20 Verdampfer
21 Verdampfer
22 Expansionsorgan
23 Expansionsorgan
24 Gebläse
25 Gebläse
205/206 Hybrid-Kompressor
410 erstes Ventil
411 absperrbarer Zweig
412 zweites Ventil
413 abperrbarer Zweig
726 erstes Ventil
727 zweites Ventil
728 erster Zweig
729 zweiter Zweig

## Patentansprüche

1. Kraftfahrzeug-Standklimaanlage mit einem Kältemittel-Kreislauf (4), in welchem mindestens ein Kompressor (5, 6; 105; 205/206) angeordnet ist, welcher das Kältemittel im (4) umwälzt, wobei im Kältemittel-Kreislauf (4) ein, von einem mechanisch mit Hilfe des Kraftfahrzeug-Motors angetriebenen Lüfter (8), luftgekühlter Kondensator (7) zur Kühlung des vom Kompressor (5, 6) kommenden Kältemittels angeordnet ist, wobei im Kältemittel-Kreislauf (4) ein zweiter Kondensator (14) vorgesehen ist, **dadurch gekennzeichnet, dass** der zweite Kondensator (14) parallel zum ersten Kondensator (7) angeordnet ist und von einem Luftstrom durchströmbar ist, der durch einen elektrisch antreibbaren Lüfter (15) gefördert wird.

2. Kraftfahrzeug-Standklimaanlage nach einem der vorhergehenden Ansprüche, **dadurch gekennzeichnet, dass** ein Bypass um den zweiten Kondensator (14) vorgesehen ist.

3. Kraftfahrzeug-Standklimaanlage nach einem der vorhergehenden Ansprüche, **dadurch gekennzeichnet, dass** ein Bypass um den ersten Kondensator (7) vorgesehen ist.

4. Kraftfahrzeug-Standklimaanlage nach einem der vorhergehenden Ansprüchen, **dadurch gekennzeichnet, dass** im Standbetrieb beide Kondensatoren (7, 14) von Kältemittel zumindest teilweise durchströmt werden, wobei nur einer der Kondensatoren (14) von einem Luftstrom gekühlt wird.

5. Kraftfahrzeug-Standklimaanlage nach Anspruch 4, **dadurch gekennzeichnet, dass** einer der im Standbetrieb nur teilweise durchströmten Kondensatoren (7) als zusätzlicher Sammler für Kältemittel dient.

6. Kraftfahrzeug-Standklimaanlage nach einem der vorhergehenden Ansprüche, **dadurch gekennzeichnet, dass** jedem der Kondensatoren (7, 14) nachfolgend angeordnet ein Sammler (9, 16) angeordnet ist.

7. Kraftfahrzeug-Standklimaanlage nach einem der vorhergehenden Ansprüchen, **dadurch gekennzeichnet, dass** im Standbetrieb die elektrische Energieversorgung über Batterien, über eine externe Stromversorgung und/oder über eine APU erfolgt.

## Claims

1. Engine-independent motor vehicle air-conditioning system, with a coolant circuit (4) in which at least one compressor (5, 6; 105; 205/206) is arranged, which circulates the coolant in the circuit (4), such that in the coolant circuit (4) is also arranged a condenser (7) air cooled by a fan (8) driven mechanically with the help of the motor vehicle engine for cooling the coolant coming from the compressor (5, 6), and a second condenser (14) is provided in the coolant circuit (4), **characterised in that** the second condenser (14) is arranged parallel to the first condenser (7), and an air-flow delivered by an electrically driven fan (15) can flow through it.

2. Engine-independent motor vehicle air-conditioning system according to any of the preceding claims, **characterised in that** a bypass around the second condenser (14) is provided.

3. Engine-independent motor vehicle air-conditioning system according to any of the preceding claims, **characterised in that** a bypass around the first condenser (7) is provided.

4. Engine-independent motor vehicle air-conditioning system according to any of the preceding claims, **characterised in that** during autonomous operation coolant flows at least partially through both condensers (7, 14), but only one of the condensers (14) is cooled by an air flow.

5. Engine-independent motor vehicle air-conditioning system according to Claim 4, **characterised in that** one of the condensers (7) through which coolant flows only partially during autonomous operation serves as an additional collector for coolant.

6. Engine-independent motor vehicle air-conditioning system according to any of the preceding claims, **characterised in that** a collector (9, 16) is arranged downstream from each of the condensers (7, 14).

7. Engine-independent motor vehicle air-conditioning system according to any of the preceding claims, **characterised in that** during autonomous operation electrical energy is supplied from batteries, from an external current supply and/or from an APU.

## Revendications

1. Système de climatisation autonome d'un véhicule automobile, comprenant un circuit (4) de fluide frigorigène dans lequel est disposé au moins un compresseur (5, 6 ; 105 ; 205 / 206) qui fait circuler le fluide frigorigène dans le circuit (4) où, dans le circuit (4) de fluide frigorigène, est disposé un condenseur (7) refroidi, à l'air, par un ventilateur (8) entraîné mécaniquement à l'aide du moteur du véhicule automobile, ledit condenseur servant au refroidissement du fluide frigorigène provenant du compresseur (5, 6), où il est prévu un deuxième condenseur (14) dans le circuit (4) de fluide frigorigène,
**caractérisé en ce que** le deuxième condenseur (14) est disposé parallèlement au premier condenseur (7) et peut être traversé par un flux d'air qui est fourni par un ventilateur (15) commandé électriquement.

2. Système de climatisation autonome d'un véhicule automobile selon la revendication 1, **caractérisé en ce qu'**il est prévu une dérivation autour du deuxième condenseur (14).

3. Système de climatisation autonome d'un véhicule automobile selon l'une ou l'autre des revendications précédentes, **caractérisé en ce qu'il** est prévu une dérivation autour du premier condenseur (7).

4. Système de climatisation autonome d'un véhicule automobile selon l'une quelconque des revendications précédentes, **caractérisé en ce que** les deux condenseurs (7, 14), au cours du fonctionnement en mode autonome, sont traversés au moins partiellement par du fluide frigorigène, où seulement l'un des condenseurs (14) est refroidi par un flux d'air.

5. Système de climatisation autonome d'un véhicule automobile selon la revendication 4, **caractérisé en ce que** l'un des condenseurs (7), traversé seulement de façon partielle au cours du fonctionnement en mode autonome, sert de collecteur supplémentaire pour du fluide frigorigène.

6. Système de climatisation autonome d'un véhicule automobile selon l'une quelconque des revendications précédentes, **caractérisé en ce qu'**un collecteur (9, 16) est disposé en aval de chacun des condenseurs (7, 14).

7. Système de climatisation autonome d'un véhicule automobile selon l'une quelconque des revendications précédentes, **caractérisé en ce que** l'alimentation en énergie électrique, au cours du fonctionnement en mode autonome, est réalisée par des batteries, par une alimentation en courant extérieure et / ou par un groupe auxiliaire de puissance (APU).
